# EUROPEAN PATENT SPECIFICATION

(11) **EP 2 974 234 B1**
(45) Date of publication and mention of the grant of the patent: **30.12.2020**
(21) Application number: 14762986.9
(22) Date of filing: 14.03.2014
(51) Int. Cl.: H04L 29/08, H04L 12/46, H04L 12/721, H04L 12/715, H04L 29/12, H04L 29/06, H04L 12/707, G06F 9/455, H04L 12/751

(54) **GENERATING A HOST ROUTE**
ERZEUGUNG EINER HOST-ROUTE
PRODUIRE UN CHEMIN D'HÔTE

(30) Priority: 14.03.2013 CN 201310081792
(43) Date of publication of application: 20.01.2016
(73) Proprietor: Hewlett Packard Enterprise Development LP, Houston, TX 77070 (US)
(72) Inventor: WANG, Feng, Beijing 100085 (CN)
(74) Representative: Haseltine Lake Kempner LLP
(86) International application number: PCT/CN2014/073436
(87) International publication number: WO 2014/139462

(56) References cited:
- WO-A1-2008/089303
- WO-A1-2012/031487
- WO-A1-2012/168795
- CN-A- 101 465 812
- CN-A- 102 594 652
- CN-A- 102 821 028
- US-A1- 2010 287 548
- XU S HARES HUAWEI TECHNOLOGIES Y FAN CHINA TELECOM X: "Virtual Subnet: A Host Route based Subnet Extension Solution; draft-xu-virtual-subnet-08.txt", VIRTUAL SUBNET: A HOST ROUTE BASED SUBNET EXTENSION SOLUTION; DRAFT-XU-VIRTUAL-SUBNET-08.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 5 July 2012 (2012-07-05), pages 1-17, XP015083759, [retrieved on 2012-07-05]

## Description

### BACKGROUND

In order to achieve high reliability and redundancy deployment, many enterprise networks and data centers include multiple layer-2 networks located in different geographical locations. These layer-2 networks located in different geographical positions deploy similar businesses, and may achieve layer-2 network interconnection via Ethernet virtual interconnection (EVI) technology, Overlay Transport Virtualization (OTV) technology, and the like. A virtual machine may migrate among the layer-2 networks to achieve dynamic allocation and management of resources among the layer-2 networks.

An Internet user may access an application service provided by a virtual machine in a layer-2 network through an Internet access service provider. However, the user does not perceive the location of the virtual machine providing the application service. Therefore, when the virtual machine migrates from one layer-2 network to another layer-2 network, the IP address of the migrated virtual machine should not change.

US 2010/0287548 A1 describes methods, systems and computer programs for migrating a virtual machine (VM) executing on a first host to a second host, where the first host and the second are on different networks. One embodiment of a method includes assigning to the VM a VM address (VMA) belonging to a VM network and publishing a first route to an associated network (AN) via a first virtual router executing on the first host. The method further includes migrating the VM from the first host to the second host, the VM maintaining the assigned VMA after migrating, and publishing a second route to the AN via a second virtual router executing on the second host. The first and second virtual routers have addresses belonging to the VM network, and network packets to and from the VM flow through the virtual router where the VM is executing. A temporary tunnel between the virtual routers allows traffic to flow to the VM while the new route to AN is propagated throughout the network. The use of the associated network, which is associated with the VM, and the publishing of a new route to the VM allow the VM to keep the original VMA network address after the migration.

WO 2008/089303 A1 describes a network device and method for distributing routing information for a virtual private network (VPN) application through a packet-Amswitched network (PSN) from a first provider edge (PE) router to a second provider edge (PE) router.

The IETF draft document entitled "Virtual Subnet: A L3VPN-based Subnet Extension Solution", version 8, dated July 5, 2012, and referred to as draft-xu-virtual-subnet-08 describes a host route based subnet extension solution using BGP/MPLS, IP VPN [RFC4364], and ARP proxy [RFC925][RFC1027] technologies. Two CE hosts which are configured within the same subnet are located in two different data centers (i.e., DC West and DC East) respectively. PE routers (i.e., PE-1 and PE-2) which are used for interconnecting the above two data centers create host routes for their local CE hosts respectively and then redistribute these routes into BGP.

### SUMMARY OF INVENTION

The invention is set out in the appended claims.

### BRIEF DESCRIPTION OF THE DRAWINGS

For a better understanding of the present disclosure, reference should be made to the Detailed Description below, in conjunction with the following drawings in which like reference numerals refer to corresponding parts throughout the figures.
FIG.1 is a schematic diagram illustrating an application mode in accordance with an example of the present disclosure.
FIG. 2A is a flow diagram illustrating a method for generating a host route according to an example of the present disclosure.
FIG. 2B is a flow diagram illustrating a method for generating a host route according to another example of the present disclosure.
FIG. 3 is a schematic diagram illustrating how to release a host route by a gateway according to an example of the present disclosure.
FIG. 4 is a schematic diagram illustrating a border gateway protocol (BGP) update message according to an example of the present disclosure.
FIG. 5 is a schematic diagram illustrating how to release a host route of a migrated host by a gateway according to an example of the present disclosure.
FIG. 6 is a schematic diagram illustrating a device for generating a host route according to an example of the present disclosure.
FIG. 7 is a schematic diagram illustrating a device for generating a host route according to another example of the present disclosure.

### DETAILED DESCRIPTION

Reference will now be made in detail to examples, which are illustrated in the accompanying drawings. In the following detailed description, numerous specific details are set forth in order to provide a thorough understanding of the present application. Also, the figures are illustrations of an example, in which modules or procedures shown in the figures are not necessarily essential for implementing the present application. In other instances, well-known methods, procedures, components, and circuits have not been described in detail so as not to unnecessarily obscure aspects of the examples. As used herein, the term "includes" means includes but not limited to, the term "including" means including but not limited to. The term "based on" means based at least in part on. In addition, the terms "a" and "an" are intended to denote at least one of a particular element.

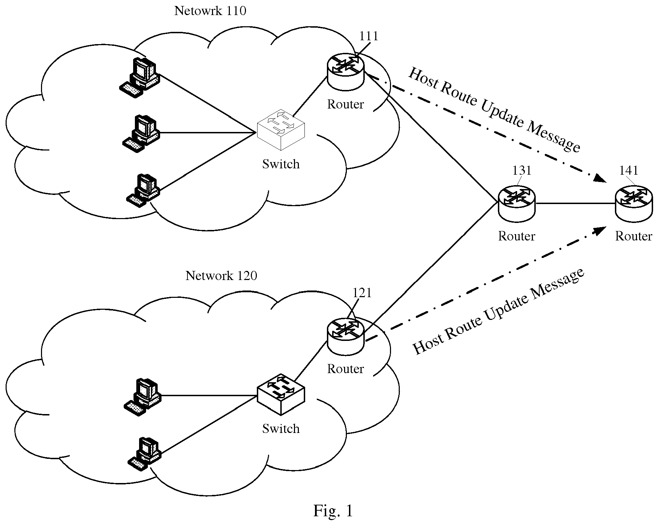

As shown in FIG.1, a network 110 and a network120 are layer-2 networks located in different geographical positions of a data center. The router 111 is a gateway device of the network 110, and the router 121 is a gateway device of the network 120. The router 141 is an entrance network device of a service provider. The router 131 is an intermediate routing device between the routers 111,121 and the router 141.

The routers 111, 121 and 141 run IBGP. The router 141 is configured as an Internal border gateway protocol (IBGP) peer of the routers 111 and 121, and the routers 111 and 121 are configured as IBGP peers of the router 141. The router 111 and router 141 establish an IBGP session via a BGP open message. The router 121 and router 141 establish an IBGP session via a BGP open message. The routers 111 and 121 may generate host route entries based on IP addresses of virtual machines (VMs) or hosts, and may send host router update messages carrying host routes of the generated host route entries to the router 141.

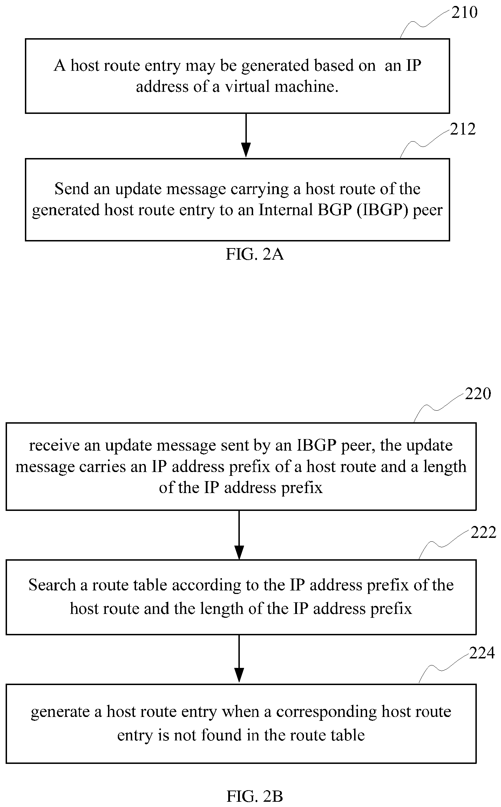

FIG. 2A is a flow diagram illustrating. a method for generating a host route by a gateway according to an example of the present disclosure. As shown in FIG. 2A, the method may include the following operations.

In block 210, a host route entry may be generated based on an IP address of a virtual machine. The host route entry is an entry in a routing or forwarding table of the gateway. The host route entry comprises a host route. An IP address prefix and a length of the IP address prefix in the host route are respectively the IP address of the virtual machine and a length of the IP address.

In block212, an update message carrying a host route of the generated host route entry may be sent to an IBGP peer. An IP address prefix of the host route and a length of the IP address prefix respectively correspond an IP address of the virtual machine and a length of the IP address.

In the example, a local device may obtain the IP address of a virtual machine, generate a host route entry according to the obtained IP address, and send an update message carrying a host route of the generated host route entry to an Internal BGP (IBGP) peer of the local device.

FIG. 2B is a flow diagram illustrating a method for generating a host route by an entrance network device of a service provider according to another example of the present disclosure. As shown in FIG. 2B, the method may include the following operations.

In block 220, an update message sent by an IBGP peer may be received. The update message carries an IP address prefix of a host route and a length of the IP address prefix. The update message may be a BGP update message carrying path attributes of a host route.

In block 222 a route table may be searched according to the IP address prefix of the host route and the length of the IP address prefix.

In block 224, when it is determined that no host route entry is found, a host route entry may be established according to the IP address prefix of the host route and the length of the IP address prefix. The next-hop of the newly established host route entry is a general route encapsulation (GRE) tunnel connecting the entrance network device the IBGP peer.

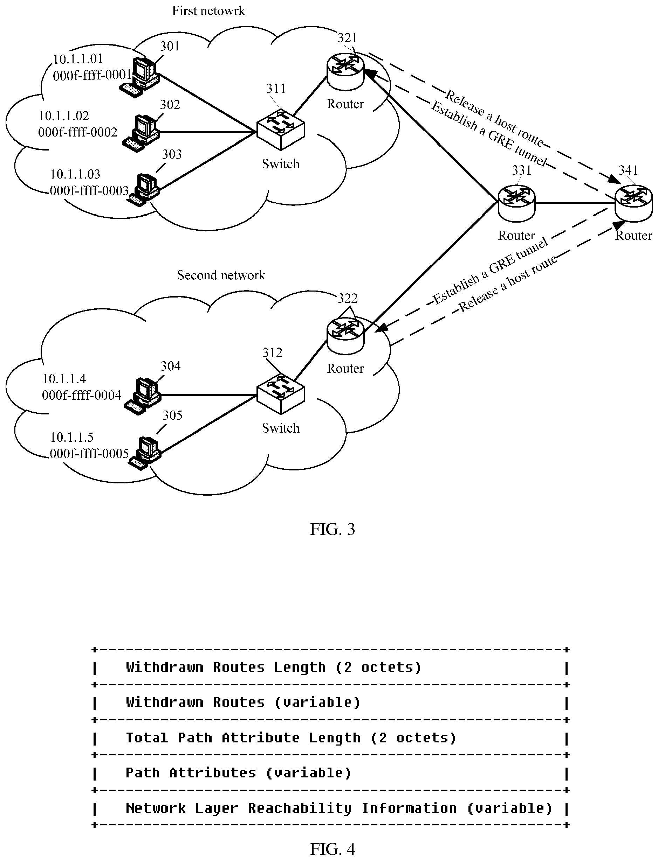

FIG. 3 is a schematic diagram illustrating how to release a host route by a gateway according to an example of the present disclosure. As shown in FIG.3, a first network and a second network are layer-2 networks located in different geographical positions of a data center. The layer-2 network interconnection may be achieved between the layer-2 networks by employing Ethernet virtual interconnection (EVI) technology or overlay transport virtualization (OTV) technology. The router 321 is a gateway device of the first network, and the router 322 is a gateway device of the second network. The router 341 is an entrance network device of a service provider. The router 331 is an intermediate routing device between the router 321 and the router 341. The host is a device in the Internet.

The routers 321, 331 and 341 run IBGP. The router 341 is configured as an IBGP peer of the routers 321 and 322, and the routers 321 and 322 are configured as IBGP peers of the router 341. The router 321 and router 341 establish an IBGP session via a BGP open message. The router 322 and router 341 established an IBGP session via a BGP open message. The routers 321, 322 and 341 may further communicate with each other through interior gateway protocol (IGP), such as open shortest path first (OSPF) protocol. The routers 321 and 322 may respectively release a network-segment route of the local network according to the IGP, and then the router 341 may record corresponding route entries in the local route table. When the network-segment routes released by the routers 321 and 322 are the same, the router 341 may record a corresponding equal-cost route entry in the local route table.

The virtual machines 301 to 303 in the first network may broadcast free address resolution protocol (ARP) messages. The free ARP message broadcasted by the virtual machine 301 is taken as an example, the Ethernet source MAC address is 000f-ffff-0001, the Ethernet destination MAC address is an all-F broadcast address; the sender IP address is 10.1.1.1, the sender MAC address is 000f-ffff-0001, the target IP address is10.1.1.1, and the target MAC address is an all-zero MAC address.

After receiving the free ARP messages, a switch 311 may learn the MAC addresses, and forward the received ARP messages via a port which belongs to the virtual local area network (VLAN).

After receiving the free ARP messages, the router 321 may generate ARP entries of an ARP table and host route entries of a route table according to the sender IP addresses and the sender MAC addresses. The router 321 may send a BGP update message for releasing a host route to the router 341 (the IBGP peer).

Host route entries generated by the router 321 may be shown in the following table 1, in each host route entry generated by the router 321, the IP address prefix is the same as the IP address of a virtual machine, and the mask-length is 32 which is equivalent to the length of the IP address of the virtual machine.

**Table 1**

| IP address prefix | Mask-length | Next-hop |
|---|---|---|
| 10.1.1.1 | 32 | 10.1.1.1 |
| 10.1.1.2 | 32 | 10.1.1.2 |
| 10.1.1.3 | 32 | 10.1.1.3 |

In the BGP update message for releasing a host route, the source IP address is the IP address 1.1.1.1 of the router 321, the destination IP address is the IP address of an IBGP peer of the router 321. For example, the router 341 is an IBGP peer of the router 321, and so the destination IP address may for example be 2.2.2.1. The link layer packet bearing the BGP update message may be an Ethernet packet.

FIG. 4 is a schematic diagram illustrating a BGP update message according to an example of the present disclosure. As shown in FIG.4, the BGP update message may include a Withdrawn Routes Length field, a Withdrawn Routes field, a Total Path Attribute Length field, a Path Attributes field and a Network Layer Reachability Information (NLRI) field.

The BGP update message for releasing a host route does not include a withdrawn route, therefore the values of both of the Withdrawn Routes Length field and the Withdrawn Routes field are zero. The value of the Total Path Attribute Length field is 1, which indicates that there is one path attribute in the BGP update message.

In the example, the Path Attributes field may be extended to include a host route path attribute. The host route path attribute is a community attribute in path attributes, which indicates that all routes listed in the NLRI field possess the attribute.

The specific attribute type, attribute length, attribute value (T-L-V) of the host route path attribute is not limited in the example, and only some achievement examples of the attribute type field, attribute length filed and attribute value field of the host route path attribute are described hereinafter.

The attribute type field may include a flag field and a type code field. The flag field and the type code field may respectively take up one byte. In the example, the flag field may indicate that the path attribute belongs to an optional non-transitive attribute (when the router does not support the attribute, the attribute will be ignored, and other IBGP peers will not be informed of the attribute). The type code field may indicate the name of the path attribute. For instance, the value of the type code field may be set as 8, and the router may identify the host route path attribute according to the value of the type code field. The value of the type code field is not limited in the present example.

The attribute length filed may indicate the total length of the host route path attribute. For instance, the attribute length filed may be set as 4, indicating the total length of the host route path attribute is 4.

The attribute value field may indicate the value of the host route path attribute. The attribute value field may be set as the AS number of an autonomous system (AS) where the BGP network is located. In the example, the BGP network includes a first network, a second network, an intermediate router 331 and an entrance network device341. Suppose the AS number of the BGP network is AS:1000.

The NLRI field may describe released host routes, and may be three two-tuples, namely <32, 10.1.1.1>, <32, 10.1.1.2>, <32, 10.1.1.3>.

The number of the host routes listed in the NLRI field is not limited in the example. When the router 321 releases N host routes via a BGP update message, the NLRI field includes N two-tuples, namely <Length1, Prefix1>, <Length2, Prefix2>, ...... <Length-n, Prefix-n>. N is an integer which is equal to or larger than 1. The length of the IP address prefix in a two-tuple is the same as the length of the IP address of a virtual machine, and the IP address prefix in a two-tuple is the same as the IP address of the virtual machine.

When receiving an ARP request message or an ARP response message of a virtual machine, the router 321 may also perform above mentioned process for releasing a host route. The router 321 may optionally release a host route. For instance, an access control list (ACL) may be configured in the router 321. When the router 321 determines that sender IP addresses 10.1.1.1, 10.1.1.2 and 10.1.1.3 in received free ARP messages, ARP request messages or ARP response messages are IP addresses configured in the ACL or belongs to a network segment configured in the ACL, the process for releasing a host route may be performed. When a sender IP address in a free ARP message received by the router 321 does not match any of the IP addresses in the ACL configured in the router 321, the router 321 may not perform the process for releasing a host route. The router 321 does not release a host route to other routers except the IBGP peer.

The router 331 may forward the received BGP update message by taking it as an ordinary IP packet and without perceiving whether it is a BGP packet.

The router 341 may receive the BGP update message, and identify the host route path attribute according to the type code field. When determining that the BGP update message is to release a host route, the router 341 will not forward the BGP update message carrying the host route path attribute, and not inform other IBGP peers of the BGP update message.

When determining that a generic routing encapsulation (GRE) tunnel reaching the router 321 is not established, the router 341may establish a first GRE tunnel. The destination IP address of the first GRE tunnel interface is the IP address of an IBGP peer which releases the host route, namely the IP address 2.2.2.1 of the router 321. The source IP address of the first GRE tunnel interface is the IP address 1.1.1.1 of the router 341.

When determining that host route entries corresponding to the three host routes are not recorded in the route table, the router 341 may record the host route entries in the route table according to an IP address prefix and a lengths of the IP address prefix of each of two-tuples in the NLRI field and a tunnel ID Tunnel 1 of the established first GRE tunnel. The host route entries recorded by the router 341 may be shown in the following table 2.

**Table 2**

| IP address prefix | Mask-length | Next-hop |
|---|---|---|
| 10.1.1.1 | 32 | tunnel 1 |
| 10.1.1.2 | 32 | tunnel 1 |
| 10.1.1.3 | 32 | tunnel 1 |

In the second network, the virtual machines 304 and 305 broadcast free ARP messages. After receiving the free ARP messages, the switch 312 may perform MAC address learning according to Ethernet source MAC addresses, and forward the received ARP messages via a port which belongs to the same VLAN.

After receiving the free ARP messages, the router 322 may generate ARP entries and host route entries. The host route entries generated by the router 322 may be shown in the following table 3.

**Table 3**

| IP address prefix | Mask -length | Next-hop |
|---|---|---|
| 10.1.1.4 | 32 | 10.1.1.4 |
| 10.1.1.5 | 32 | 10.1.1.5 |

The router 322 may send a BGP update message to the router 341. The principle of releasing a host route via a BGP update message by the router 322 may be the same as that of releasing a host route by the router 321, no further descriptions will be given in the example. In the BGP update message sent by the router 322, the NLRI field carries two-tuples <32, 10.1.1.4> and <32, 10.1.1.5>. The two-tuple <32, 10.1.1.4> indicates a reachable route of the virtual machine 304, and the two-tuple <32, 10.1.1.5> indicates a reachable route of the virtual machine 305.

The router 331 may forward the received BGP update message by taking it as an ordinary IP packet.

The router 341 may receive the BGP update message came from above mentioned router 322, and identify the host route path attribute according to the Path Attributes field in the BGP update message, and determine that the router 322 releases a host route. When determining that a GRE tunnel reaching the router 322 is not established, the router 341 may establish a second GRE tunnel. The source IP address and destination IP address of the second GRE tunnel are respectively the IP address 2.2.2.1 of the router 341 and the IP address 3.3.3.1 of the router 322.

The host route entries learned by the router 341 according to two-tuples in the NLRI field and the tunnel ID tunnel 2 of the second GRE tunnel may be shown in the table 4.

**Table 4**

| IP address prefix | Mask-length | Next-hop |
|---|---|---|
| 10.1.1.1 | 32 | tunnel 1 |
| 10.1.1.2 | 32 | tunnel 1 |
| 10.1.1.3 | 32 | tunnel 1 |
| 10.1.1.4 | 32 | tunnel 2 |
| 10.1.1.5 | 32 | tunnel 2 |

When receiving a IP packet, the router 341 may search the route table for a host route entry matching with the destination IP address 10.1.1.1 according to the longest prefix match principle, and send the IP packet according to the next-hop tunnel 1 in the host route entry. That is to say, an interface encapsulation entry of the first GRE tunnel is found, and the IP packed is encapsulated with an outer tunnel IP header and a GRE header, then a GRE tunnel packet is obtained. The passenger protocol of the encapsulated GRE header is IP protocol. The source IP address and the destination IP address of encapsulated tunnel IP header are respectively the source IP address 2.2.2.1 and destination IP address 1.1.1.1 of the first GRE tunnel. The router 341 may send the GRE tunnel packet via a physical port of the first GRE tunnel. The type of a message for bearing the IP packet received by the router 341 is not limited by the example. The type of tunnel packet is not limited either, any other tunnel protocol bearing layer-3 packet may be used.

The router 331 may receive the GRE tunnel packet, and forward the GRE tunnel packet to the router 321 according to the destination IP address 1.1.1.1 of the outer tunnel IP header.

When receiving the GRE tunnel packet, and determining that the destination IP address of the outer tunnel IP header is the IP address of the router 321, the router 321 may remove the GRE encapsulation (including the outer tunnel IP header and GER header), and find a host route entry matching with the destination IP address 10.1.1.1 from the local route table according to the longest prefix match principle. The router 321 may forward the received IP packet to the next-hop 10.1.1.1 in the host route entry. For instance, the router 321 may find a matching ARP entry according to the next-hop 10.1.1.1 from an ARP table, and encapsulate the IP packet into an Ethernet packet according to the matching ARP entry, and send the Ethernet packet via a port of the matching ARP entry.

As can be known according to technical solutions of above mentioned examples, when receiving IP packets which should be sent to virtual machines of different networks, the router 341 may send received IP packets to gateways of layer-2 networks where the virtual machines are respectively located through established GRE tunnels according to recorded host route entries. Even when the network segment routes released by gateways of different networks are the same, the router 341 may send received IP packets to gateways of layer-2 networks where the virtual machines are respectively located through GRE tunnels according to recorded host route entries.

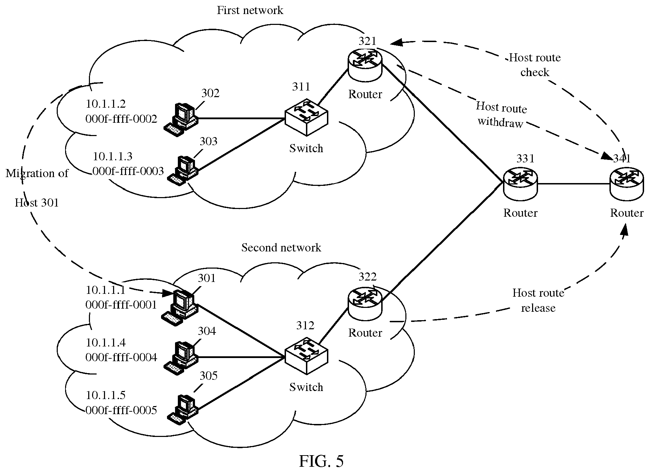

FIG. 5 is a schematic diagram illustrating how to release a host route of a migrated host by a gateway according to an example of the present disclosure.

The virtual machine 301 may migrate to the second network, and after migration the virtual machine may send a free ARP message.

The switch 312 may receive the free ARP message broadcasted by the migrated virtual machine 301, and perform MAC address learning according to the Ethernet source MAC address of the free ARP message, and forward the received free ARP message via a port of the VLAN where the switch 312 is located.

The router 322 may receive the free ARP message from the virtual machine 301, and generate an ARP entry and a host route entry. The router 322 may send a BGP update message carrying a host route path attribute. The NLRI field of the BGP update message includes a reachable host route of the virtual machine 301 expressed by a two-tuple <32, 10.1.1.1>.

The router 341 may receive the BGP update message, and identify the host route path attribute field carried in the BGP update message. When determining that the second GRE tunnel reaching the router 322 has been established, the router 341 may find a host route entry from the route table according to the IP address prefix 10.1.1.1 and the length of the IP address prefix 32 carried in the NLRI field, and determine that the next-hop in the host route entry is tunnel 1 connecting the router 321, rather than tunnel 2 connecting the router 322, which indicates that the virtual machine may migrate to another layer-2 network. In order to ensure fast switching of the traffic, the router 341 may amend the next-hop in the found host route entry to tunnel 2. The router 341 may set a to-be- checked identifier in the amended host route entry. Table 5 shows a host route entry configured with the to-be- checked identifier.

**Table 5**

| IP address prefix | Mask-length | Next-hop |
|---|---|---|
| 10.1.1.1 | 32 | tunnel 2 (to-be-checked state) |
| 10.1.1.2 | 32 | tunnel 1 |
| 10.1.1.3 | 32 | tunnel 1 |
| 10.1.1.4 | 32 | tunnel 2 |
| 10.1.1.5 | 32 | tunnel 2 |

The router 341 may initiate a route check according to the next-hop tunnel 1 previously recorded in the host route entry, to check whether 10.1.1.1/32 is in the first network which the router 321 is responsible for. The router 341 may send a check message, such as a BGP update message for checking a host route. In the BGP update message, a source IP address and a destination IP address are respectively an IP address of the router 341 and an IP address of an IBGP peer of the router 341. When amending the next-hop in the host route entry to tunnel 2, the router 341 may record the tunnel 1 previously recorded in the next-hop in a software entry. Content recorded in the software entry may be deleted after the host route check is finished or be deleted regularly. The router 341 may determine that the IBGP peer is the router 321 according to the previously recorded next-hop tunnel 1.

The BGP update message for checking a host route does not include a withdrawn route, therefore the values of both of the Withdrawn Routes Length field and the Withdrawn Routes field are zero. The value of the Total Path Attribute Length field is 1, which indicates that there is one path attribute in the BGP update message.

In the example, the Path Attributes field in the BGP update message for checking a host route may be extended to include a host route check path attribute. The host route check path attribute is a community attribute in path attributes, which indicates that all routes listed in the NLRI field possess the attribute. The router 341, which is taken as an entrance network device of a service provider, may send a BGP update message in which the Path Attributes field includes the host route check path attribute.

The specific attribute type, attribute length, attribute value (T-L-V) of the host route check path attribute is not limited in the example, and only some achievement examples of the attribute type field, attribute length filed and attribute value field of the host route check path attribute are described hereinafter.

The attribute type field may include a flag field and a type code field. The flag field and the type code field may respectively take up one byte. In the example, the flag field may indicate that the path attribute belongs to an optional non-transitive attribute, namely, when a router does not support the attribute, the attribute will be ignored, and other IBGP peers will not be informed of the attribute. The type code field may indicate the name of the path attribute. For instance, the value of the type code field may be set as 7, and the router may identify the host route check path attribute according to the value of the type code field. The value of the type code field is not limited in the present example.

The attribute length field may indicate the total length of the host route check path attribute. For instance, the attribute length filed may be set as 4, indicating that the total length of the host route check path attribute is 4.

The attribute value field may indicate the value of the host route check path attribute. The attribute value field may be set as the AS number of a BGP network where the router is located. For instance, the AS number of the BGP network at which the router 341 is located is AS:1000.

In the BGP update message for checking a host route, the two-tuple <32, 10.1.1.1> in the NLRI field describe the host route to be checked. The number of two-tuples in the NLRI field is not limited in the example.

The router 331 may forward the received BGP update message for checking a host route by taking it as an ordinary IP packet and without perceiving whether it is a BGP packet.

After receiving the BGP update message, and determining that the BGP update message carries the host route check path attribute, the router 321 may initiate an ARP checking mechanism. The router 321 may send an ARP request message in the first network according to the IP address prefix 10.1.1.1 in the BGP update message. That is, the target IP address in the ARP request message is 10.1.1.1.

When no ARP response message having the sender IP address 10.1.1.1 is received in a predetermined time period, the router 321 may delete a host route entry of IP address is 10.1.1.1, from the route table.

The router 321 may send a first withdraw message, such as a BGP update message carrying a host route withdraw path attribute, in the first withdraw message, the source IP address and the destination IP address may be respectively the IP address of the router 321 and the IP address of the router 341. In the BGP update message for withdrawing a host route, the number of routes to be withdrawn included in the Withdrawn Routes Length field is 1, and the Withdrawn Routes field includes a two-tuple <32, 10.1.1.1>. The example may adopt some existing implementation of T-L-V of a route withdraw path attribute, and no further description of implementation of T-L-V of the host route withdraw path attribute will be given hereinafter.

In the example, the router 321 cleverly utilizes the characteristics of the ARP message, determines a virtual machine which does not feedback a ARP response message in a predetermined time period as a migrated virtual machine, thus the virtual migration detection is achieved.

The router 331 may forward the BGP update message carrying a host route withdraw path attribute to the router 341.

The router 341 may receive the BGP update message, identify the host route withdraw path attribute carried in the BGP update message, and find a host route entry configured with a to-be-checked identifier from the route table according to the IP address prefix 10.1.1.1 and the length of the IP address prefix 32 carried in the Withdrawn Routes field. The router 341 may remove the to-be-checked identifier from the found host route entry. Thus in the route table, the next-hop in the host route entry with 10.1.1.1/32 is tunnel 2.

When the router 321, according to a local host route entry, sends a BGP update message carrying a host route path attribute again, the router 341 receives the BGP update message, and identifies the host route path attribute carried in the BGP update message, searches out a corresponding host route entry according to an IP address prefix in the NLRI field, and the next-hop in the found host route entry is tunnel 1, the router 321 does not do any processing to the searched out host route entry.

When a host(VM) in the first network disconnects with the network for some reasons, the router 321 may further delete the host route entry according to a preset condition, and initiatively send a second withdraw message, such as a BGP update message for withdrawing a host route. When the router 341 receive the BGP update message, identify the host route withdraw path attribute carried in the BGP update message, and find corresponding host route entry according to the IP address prefix in the NLRI, the router 341 may delete the found host route entry. In the example, whether the router 321 initiatively deletes the preset condition of the host route entry is not limited. Examples as to the reasons which may result in the change of the host route and the deletion of the host route entry are given hereinafter. For instance, a port via which the router 321 connects with a server is down, a ARP entry of the router 321 is deleted, a ACL filtering rule with which the router 321 releases a host route is amended, a VM has failed to migrate due a server on which the virtual machine is located being down, or the like.

In the example, the router, which is taken as an entrance network device of a service provider, determines that a received BGP update message carries a host route path attribute. When the router does not support the host route path attribute, the router may ignore the BGP update message carrying the host route path attribute.

The present disclosure may also be applied to the Internet protocol version 6 (IPv6) network. For instance, a virtual machine may send a neighbor solicitation (NS) message, a gateway may obtain a host IP address according to the source IP address of the NS message, and generate a host route according to the host IP address. In a host route entry, the IP address prefix may be the IP address of a host in the IPv6 network; and the length of the IP address prefix may equal to the length of the IP address of the host in the IPv6 network, namely 128. The passenger protocol of a GRE tunnel established by the router 341 may be IPv6 protocol.

In the example, when a virtual machine migrates between different layer-2 networks, an entrance network device may update a route table according to a host route released by a gateway of a layer-2 network where the virtual machine is located currently, and send received data packet to the gateway of the layer-2 network where the virtual machine is located currently, thus the access to a host of migrated virtual machine is achieved.

In the example, the type code in the BGP update message carrying a host route path attribute differs from the type code in the BGP update message carrying a host route check path attribute. However, the attribute length filed in the BGP update message carrying a host route path attribute may be the same as that in the BGP update message carrying a host route check path attribute. The AS numbers of IBGP peers may be the same.

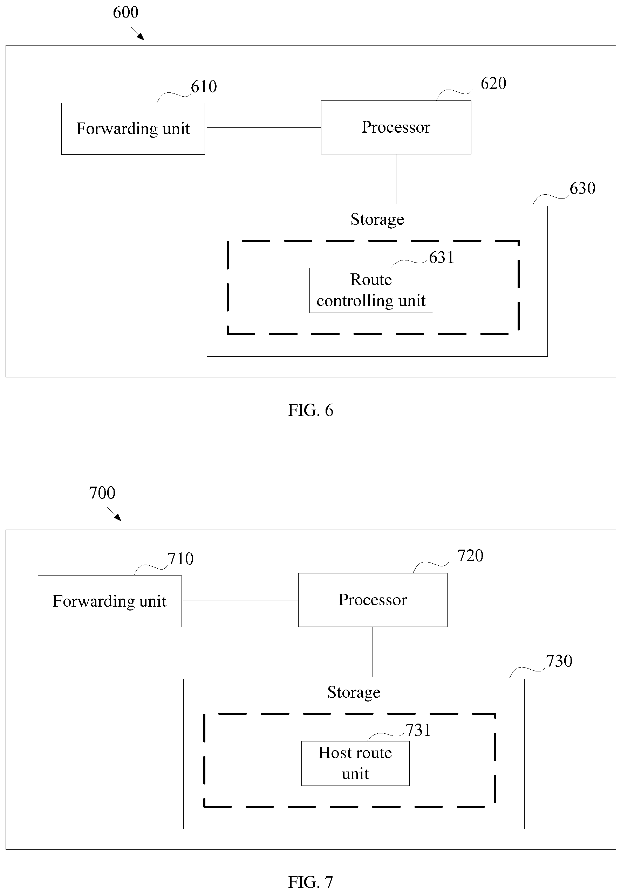

FIG. 6 is a schematic diagram illustrating a device for generating a host route according to an example of the present disclosure. As shown in FIG.6, the device 600 may include a forwarding unit 610, a processor 620 and a storage 630 which has a communication connection with the processor 620. The storage 630 may include one or more program modules to be executed by the processor 620, the one or more program modules may include a route controlling unit 631.

The route controlling unit 631 may generate a host route entry according to an IP address of a virtual machine, and generate an update message carrying a host route of the generated host route entry. An IP address prefix of the host route and a length of the IP address prefix respectively correspond an IP address of the virtual machine and a length of the IP address. The forwarding unit 610 may store the generated host route entry, and send the update message to an IBGP peer.

The forwarding unit 610 may receive a check message came from the IBGP peer. The route controlling unit 631 may check the reachability of the host route in the check message.

The router controlling unit 631 may generate a first withdraw message carrying an IP address prefix of an unreachable host route and a length of the IP address prefix. The forwarding unit 610 may send the first withdraw message to an IBGP peer.

The route controlling unit 631 may delete the host route entry recorded by the forwarding unit 610, generate a second withdraw message carrying an IP address prefix of a host route in the deleted host route entry and a length of the IP address prefix. The forwarding unit 610 may send the second withdraw message to the IBGP peer.

The forwarding unit 610 may receive a GRE tunnel packet from the IBGP peer, decapsulate the GRE tunnel packet into an IP packet, find a host route entry according to the IP address of the IP packet, and send the IP packet via an interface according to the next-hop in the found host route entry.

FIG. 7 is a schematic diagram illustrating a device for generating a host route according to another example of the present disclosure. As shown in FIG.7, the device may include a forwarding unit 710, a processor 720 and a storage 730 which has communication connection with the processor 720. The storage 730 may include one or more program modules to be executed by the processor 720, the one or more program modules may include a host route unit 731.

The forwarding unit 731 may receive an update message came from an IBGP peer.

When not searching out a host route entry matching with an IP address prefix or a host route in the update message and a length of the IP address prefix from a route table in the forwarding unit 710, the host route unit 731 may generate a host route entry and store the host route entry in the route table. The host route in the generated host route entry is the host route in the update message, and the next-hop in the generated host route entry is a GRE tunnel connecting the IBGP peer.

When searching out a host route entry matching with an IP address prefix of a host route in the update message and a length of the IP address prefix from the route table, and the next-hop in the host route entry differs from the GRE tunnel connecting the IBGP peer, the host route unit 731 may amend the next-hop in the host route entry to a GRE tunnel connecting the IBGP peer, configure a to-be-checked identifier, and generate a check message according to an IP address prefix of a host route entry configure with the to-be-checked identifier and a length of the IP address prefix. The forwarding unit 710 may send the check message to the previous next-hop of the host route entry configured with the to-be-checked identifier.

The forwarding unit 710 may further receive a first withdraw message came from the previous next-hop. The first withdraw message includes an IP address prefix of an unreachable host route and a length of the IP address prefix. The host route unit 731 may find the host route entry configured with a to-be-checked identifier from the forwarding unit 710 according to the IP address prefix of the unreachable host route and the length of the IP address prefix, and delete the to-be-checked identifier.

The forwarding unit 710 may further receive a second withdraw message came from the IBGP peer. The host route unit 731 may find a host route entry according to the IP address prefix of the host route carried in the second withdraw message and the length of the IP address prefix, and delete the found host route entry.

The forwarding unit 710 may receive an IP packet, and encapsulate the IP packet into a GRE tunnel packet according to the next-hop in a host route entry matching with the destination IP address of the IP packet, and send the GRE tunnel packet to the IBGP peer.

The methods and devices provided by examples of the present disclosure may be achieved by hardware, or machine-readable instructions, or a combination of hardware and machine-readable instructions. The machine-readable instructions may be stored, by at least one processor, in a non-transitory computer readable storage medium, such as a hard disk, a floppy disk, a magnetic disk, compact disk (e.g., CD-ROM, CD-R, CD-RW, DVD-ROM, DVD-RAM, DVD-RW and DVD+RW), a tape, a nonvolatile memory card, ROM and other suitable storage device. Or part of the machine-readable instructions may be achieved by specific hardware, such as custom integrated circuits, gate arrays, FPGA, PLD, a computer of specific functions, etc.

Examples of the present disclosure also provide a computer readable storage medium, which is configured to store machine-readable instructions for making a computing device (may be a personal computer, a server, a network device, etc.,) execute the method of the examples. Specifically, the system and device provided by the examples of the present disclosure all include a computer readable storage medium, which stores machine-readable program codes for achieving functions of above mentioned examples. The system and device (or CPU or MPU) may read out and execute the machine-readable program codes stored in the computer readable storage medium.

In this case, the program codes read from the computer readable storage medium can achieve anyone of above mentioned examples. Therefore, the program codes and the storage medium storing the program codes are a part of technical solutions of the present disclosure.

The storage medium for providing program codes includes a hard disk, a floppy disk, a magnetic disk, compact disk (e.g., CD-ROM, CD-R, CD-RW, DVD-ROM, DVD-RAM, DVD-RW and DVD+RW), a tape, a Flash card, ROM, and so on. Optionally, it is possible to download the program codes from a server computer via a communication network.

It should be noted that, for the program codes being executed by a computer, a part of or all of operations achieved by the program codes may be implemented by an operating system running on a computer, so as to achieve technical solutions of anyone of example mentioned above. The computer executes instructions based on the program codes.

The program codes in the storage medium are written in a memory, and the memory is located in an extended board inside a computer, or in an extended unit connected with a computer. In the example, a CPU on the extended board or the extended unit executes a part of or all of the actual operations based on the program codes, so as to realize technical solutions of any of the aforementioned embodiments.

The foregoing description, for purpose of explanation, has been described with reference to specific examples. However, the illustrative discussions above are not intended to be exhaustive or to limit the present disclosure to the precise forms disclosed. Many modifications and variations are possible in view of the above teachings. The examples were chosen and described in order to best explain the principles of the present disclosure and its practical applications, to thereby enable others skilled in the art to best utilize the present disclosure and various examples with various modifications as are suited to the particular use contemplated, but within the scope of the appended set of claims.

## Claims

1. A method for generating a host route in a system comprising a first gateway device (321) of a first network (110), a second gateway device (322) of a second network (120), and an entrance network device (341) of a service provider, wherein the entrance network device is configured as an Internal border gateway protocol, IBGP, peer of the first and second gateway devices, and the first and second gateway devices are configured as IBGP peers of the entrance network device, the method comprising:
generating (210), by the second gateway device (322), a host route entry comprising an Internet Protocol, IP, address prefix, a mask length and a next-hop, wherein the IP address prefix and the mask length are respectively an IP address of a virtual machine within the second network and a length of the IP address of the virtual machine;
sending (212), from the second gateway device (322), a border gateway protocol, BGP, update message to the entrance network device of the service provider, the BGP update message comprising a host route of the host route entry;
the method being **characterized by** receiving (220), at the first gateway device (321), a check message from the entrance network device (341), wherein the check message is a border gateway protocol, BGP, update message including the host route sent previously to the entrance network device comprising the IP address prefix, the mask length of the IP address prefix of the virtual machine, and a host route check path attribute; and
checking, by the first gateway device (321), the reachability of the host route in the check message once the check message is received from the entrance network device (341), upon determining, by the first gateway device, that the check message carries the host route check path attribute.

2. The method according to claim 1, further comprising:
sending, from the first gateway device, a first withdraw message to the IBGP peer; the first withdraw message comprises an IP address prefix of an unreachable host route and a length of the IP address prefix.

3. The method according to claim 1, further comprising:
deleting, by the first gateway device, the host route entry;
sending, from the first gateway device, a second withdraw message to the IBGP peer; the second withdraw message comprises an IP address prefix of a host route in deleted host route entry and a length of the IP address prefix.

4. A gateway device (600) for generating a host route in a system comprising a first gateway device (321) of a first network (110), a second gateway device (322) of a second network (120), and an entrance network device (341) of a service provider, wherein the entrance network device is configured as an Internal border gateway protocol, IBGP, peer of the first and second gateway devices, and the first and second gateway devices are configured as IBGP peers of the entrance network device, the gateway device comprising:
a route controlling unit (631), configured to generate a host route entry comprising an Internet Protocol, IP, address prefix, a mask length and a next-hop, wherein the IP address prefix and the mask length are respectively an IP address of a virtual machine within the second network and a length of the IP address of the virtual machine; and generate a border gateway protocol, BGP, update message carrying the host route of the host route entry; and
a forwarding unit (610), configured to store the host route entry, and send the BGP update message to the entrance network device of the service provider; the gateway device being **characterized in that**:
the forwarding unit (610) is further configured to receive a check message from the entrance network device, wherein the check message is a border gateway protocol, BGP, update message including the host route sent previously to the entrance network device comprising the IP address prefix, the mask length of the IP address prefix of the virtual machine, and a host route check path attribute; and
the route controlling unit (631) is further configured to check the reachability of the host route in the check message once the check message is received from the entrance network device, upon determining, by the first gateway device, that the check message carries the host route check path attribute.

5. The gateway device (600) according to claim 4, wherein,
the route controlling unit (631) is further configured to generate a first withdraw message comprising an IP address prefix of an unreachable host route and a length of the IP address prefix; and
the forwarding unit (610) is to send the first withdraw message to the IBGP peer.

6. The gateway device (600) according to claim 4, wherein,
the forwarding unit (610) is further configured to receive a general route encapsulation, GRE, tunnel packet from the IBGP peer; decapsulate the GRE tunnel packet into an IP packet; find a host route entry according to a destination IP address of the IP packet, and forward the IP packet according to a next-hop in found host route entry.

7. A method for generating a host route in a system comprising a first gateway device (321) of a first network (110), a second gateway device (322) of a second network (120), and an entrance network device (341) of a service provider, wherein the entrance network device is configured as an Internal border gateway protocol, IBGP, peer of the first and second gateway devices, and the first and second gateway devices are configured as IBGP peers of the entrance network device, the method being performed by the entrance network device of the service provider and comprising:
receiving (220), at the entrance network device, a border gateway protocol, BGP, update message from the second gateway device of the second network;
searching (222) in a route table of the entrance network device for a host route entry matching with an IP address prefix of a host route in the BGP update message and a mask length of the IP address prefix in the BGP update message, the host route entry comprising an IP address prefix, a mask length and a next-hop, wherein the IP address prefix of the host route comprises an IP address of a virtual machine within the second network and the mask length of the IP address prefix comprises a length of the IP address of the virtual machine;
the method being **characterized in that**
in response to not finding a host route entry matching the host route in the BGP update message, generating (224) a host route entry according to the host route in the BGP update message, and configuring a next-hop in the host route entry to be a General Routing Encapsulation, GRE, tunnel connecting the entrance network device with the second gateway device; and
in response to finding a host route entry matching with an IP address prefix of the host route in the BGP update message and a mask length of the IP address prefix in a route table, and determining that the next-hop in the host route entry differs from the GRE tunnel connecting the first gateway device, amending a next-hop in the host route entry to a GRE tunnel connecting the second gateway device with the entrance network device, configuring a to-be-checked identifier, and sending a check message to a previous next-hop of the host route entry configured with the to-be-checked identifier, wherein the check message is a border gateway protocol, BGP, update message including the host route sent previously to the entrance network device comprising the IP address prefix of the host route in the host route entry configured with the to-be-checked identifier, the mask length of the IP address prefix of the virtual machine, and a host route check path attribute.

8. The method according to claim 7, further comprising:
receiving a first withdraw message from the previous next-hop, the first withdraw message comprises an IP address prefix of an unreachable host route and a mask length of the IP address prefix;
searching for and finding the host route entry configured with the to-be-checked identifier according to the IP address prefix of the unreachable host route and the mask length of the IP address prefix; and
deleting the to-be-checked identifier.

9. The method according to claim 7, further comprising:
receiving a second withdraw message from the first gateway device; and
deleting a host route entry matching with an IP address prefix of a host route carried in the second withdraw message and a mask length of the IP address prefix.

10. An entrance network device (700) of a service provider for generating a host route in a system comprising a first gateway device (321) of a first network (110), a second gateway device (322) of a second network (120), wherein the entrance network device is configured as an Internal border gateway protocol, IBGP, peer of the first and second gateway devices, and the first and second gateway devices are configured as IBGP peers of the entrance network device, the entrance network device comprising:
a forwarding unit (710) configured to receive a border gateway protocol, BGP, update message from the second gateway device of the first network, the update message carrying a host route; and
a host route unit (731) configured to, when a host route entry matching with an Internet Protocol, IP, address prefix of a host route in the BGP update message and a mask length of the IP address prefix is not found in a route table in the forwarding unit, the IP address prefix of the host route comprising an IP address of a virtual machine within said one of the plurality of networks and the mask length of the IP address prefix comprising a length of the IP address of the virtual machine, generate the host route entry and store the host route entry in the route table in the forwarding unit, the host route entry comprising an IP address prefix, a mask length and a next-hop;
wherein the host route in the generated host route entry is the host route in the BGP update message, and the next-hop in the generated host route entry is a GRE tunnel connecting the entrance network device with the second gateway device;
wherein the host route unit (731) is further configured to, when the host route entry matching with an IP address prefix of the host route in the BGP update message and a mask length of the IP address prefix is found in the route table in the forwarding unit and a next-hop in the host route entry differs from the GRE tunnel connecting the entrance network device with the first gateway device, amend the next-hop in the host route entry to a GRE tunnel connecting the second gateway device, configure a to-be-checked identifier, and generate a check message; the entrance network device being **characterized in that** the check message is a border gateway protocol, BGP, update message including the host route sent previously to the entrance network device comprising the IP address prefix of the host route entry configured with the to-be-checked identifier, the mask length of the IP address prefix of the virtual machine, and a host route check path attribute; and
the forwarding unit (710) is further configured to send the check message to a previous next-hop of the host route entry configured with the to-be-checked identifier.

11. The entrance network device (700) according to claim 10, wherein,
the forwarding unit (710) is further configured to receive an IP packet, and encapsulate the IP packet into a GRE tunnel packet according to a next-hop in a host route entry matching with a destination IP address of the IP packet, and send the GRE tunnel packet to the second gateway device

## Patentansprüche

1. Verfahren zum Erzeugen einer Hostroute in einem System, das eine erste Gateway-Vorrichtung (321) eines ersten Netzwerks (110), eine zweite Gateway-Vorrichtung (322) eines zweiten Netzwerks (120) und eine Eingangsnetzwerkvorrichtung (341) eines Dienstanbieters umfasst, wobei die Eingangsnetzwerkvorrichtung als Internal Border Gateway Protokoll- (IBGP-) Peer der ersten und der zweiten Gateway-Vorrichtung konfiguriert ist, und die erste und die zweite Gateway-Vorrichtung als IBGP-Peers der Eingangsnetzwerkvorrichtung konfiguriert sind, wobei das Verfahren Folgendes umfasst:
Erzeugen (210), durch die zweite Gateway-Vorrichtung (322), eines Hostrouteneintrags, der ein Internetprotokoll- (IP-) Adresspräfix, eine Maskenlänge und einen Next-Hop umfasst, wobei das IP-Adresspräfix und die Maskenlänge jeweils eine IP-Adresse einer virtuellen Maschine innerhalb des zweiten Netzwerks und eine Länge der IP-Adresse der virtuellen Maschine sind;
Senden, (212) von der zweiten Gateway-Vorrichtung (322), einer Aktualisierungsnachricht für das Border Gateway Protokoll (BGP) an die Eingangsnetzwerkvorrichtung des Dienstanbieters, wobei die BGP-Aktualisierungsnachricht eine Hostroute des Hostrouteneintrags umfasst;
wobei das Verfahren durch Folgendes gekennzeichnet ist: Empfangen (220), an der ersten Gateway-Vorrichtung (321), einer Prüfnachricht von der Eingangsnetzwerkvorrichtung (341), wobei die Prüfnachricht eine Aktualisierungsnachricht für das Border Gateway Protokoll (BGP) ist, die die zuvor an die Eingangsnetzwerkvorrichtung gesendete Hostroute enthält, die das IP-Adresspräfix, die Maskenlänge des IP-Adresspräfix der virtuellen Maschine und ein Hostroutenprüfpfadattribut umfasst; und
Prüfen, durch die erste Gateway-Vorrichtung (321), der Erreichbarkeit der Hostroute in der Prüfnachricht, sobald die Prüfnachricht von der Eingangsnetzwerkvorrichtung (341) empfangen wurde, nachdem durch die erste Gateway-Vorrichtung bestimmt wurde, dass die Prüfnachricht das Hostroutenprüfpfadattribut trägt.

2. Verfahren nach Anspruch 1, das ferner umfasst:
Senden einer ersten Rückzugsnachricht von der ersten Gateway-Vorrichtung an den IBGP-Peer;
wobei die erste Rückzugsnachricht ein IP-Adresspräfix einer nicht erreichbaren Hostroute und eine Länge des IP-Adresspräfix umfasst.

3. Verfahren nach Anspruch 1, das ferner umfasst:
Löschen des Hostrouteneintrags durch die erste Gateway-Vorrichtung;
Senden einer zweiten Rückzugsnachricht von der ersten Gateway-Vorrichtung an den IBGP-Peer;
wobei die zweite Rückzugsnachricht ein IP-Adresspräfix einer Hostroute in dem gelöschten Hostrouteneintrag und eine Länge des IP-Adresspräfix umfasst.

4. Gateway-Vorrichtung (600) zum Erzeugen einer Hostroute in einem System, das eine erste Gateway-Vorrichtung (321) eines ersten Netzwerks (110), eine zweite Gateway-Vorrichtung (322) eines zweiten Netzwerks (120) und eine Eingangsnetzwerkvorrichtung (341) eines Dienstanbieters umfasst, wobei die Eingangsnetzwerkvorrichtung als Internal Border Gateway Protokoll- (IBGP-) Peer der ersten und der zweiten Gateway-Vorrichtung konfiguriert ist, und die erste und die zweite Gateway-Vorrichtung als IBGP-Peers der Eingangsnetzwerkvorrichtung konfiguriert sind, wobei die Gateway-Vorrichtung Folgendes umfasst:
eine Routenregelungseinheit (631), die dazu konfiguriert ist, einen Hostrouteneintrag, der ein Internetprotokoll- (IP-) Adresspräfix, eine Maskenlänge und einen Next-Hop umfasst, zu erzeugen, wobei das IP-Adresspräfix und die Maskenlänge jeweils eine IP-Adresse einer virtuellen Maschine innerhalb des zweiten Netzwerks und eine Länge der IP-Adresse der virtuellen Maschine sind; und
eine Aktualisierungsnachricht für das Border Gateway Protokoll (BGP) zu erzeugen, die die Hostroute des Hostrouteneintrags trägt; und
eine Weiterleitungseinheit (610), die dazu konfiguriert ist, den Hostrouteneintrag zu speichern und die BGP-Aktualisierungsnachricht an die Eingangsnetzwerkvorrichtung des Dienstanbieters zu senden;
wobei die Gateway-Vorrichtung **dadurch gekennzeichnet ist, dass**:
die Weiterleitungseinheit (610) ferner dazu konfiguriert ist, eine Prüfnachricht von der Eingangsnetzwerkvorrichtung zu empfangen, wobei die Prüfnachricht eine Aktualisierungsnachricht für das Border Gateway Protokoll (BGP) ist, die die zuvor an die Eingangsnetzwerkvorrichtung gesendete Hostroute enthält, die das IP-Adresspräfix, die Maskenlänge des IP-Adresspräfix der virtuellen Maschine und ein Hostroutenprüfpfadattribut umfasst; und
die Routenregelungseinheit (631) ferner dazu konfiguriert ist, die Erreichbarkeit der Hostroute in der Prüfnachricht zu prüfen, sobald die Prüfnachricht von der Eingangsnetzwerkvorrichtung empfangen wurde, nachdem durch die erste Gateway-Vorrichtung bestimmt wurde, dass die Prüfnachricht das Hostroutenprüfpfadattribut trägt.

5. Gateway-Vorrichtung (600) nach Anspruch 4, wobei die Routenregelungseinheit (631) ferner dazu konfiguriert ist, eine erste Rückzugsnachricht zu erzeugen, die ein IP-Adresspräfix einer nicht erreichbaren Hostroute und eine Länge des IP-Adresspräfix umfasst; und
wobei die Weiterleitungseinheit (610) die erste Rückzugsnachricht an den IBGP-Peer senden soll.

6. Gateway-Vorrichtung (600) nach Anspruch 4, wobei die Weiterleitungseinheit (610) ferner dazu konfiguriert ist, ein allgemeines Routeneinkapselungs- (GRE-) Tunnelpaket von dem IBGP-Peer zu empfangen;
das GRE-Tunnelpaket in ein IP-Paket einzukapseln;
einen Hostrouteneintrag gemäß einer Ziel-IP-Adresse des IP-Pakets zu finden und das IP-Paket gemäß einem Next-Hop in dem gefundenen Hostrouteneintrag weiterzuleiten.

7. Verfahren zum Erzeugen einer Hostroute in einem System, das eine erste Gateway-Vorrichtung (321) eines ersten Netzwerks (110), eine zweite Gateway-Vorrichtung (322) eines zweiten Netzwerks (120) und eine Eingangsnetzwerkvorrichtung (341) eines Dienstanbieters umfasst, wobei die Eingangsnetzwerkvorrichtung als ein Internal Border Gateway Protokoll- (IBGP-) Peer der ersten und der zweiten Gateway-Vorrichtung konfiguriert ist, und die erste und die zweite Gateway-Vorrichtung als IBGP-Peers der Eingangsnetzwerkvorrichtung konfiguriert sind, wobei das Verfahren durch die Eingangsnetzwerkvorrichtung des Dienstanbieters ausgeführt wird und Folgendes umfasst:
Empfangen (220) einer Aktualisierungsnachricht für das Border Gateway Protokoll (BGP) von der zweiten Gateway-Vorrichtung des zweiten Netzwerks an der Eingangsnetzwerkvorrichtung;
Suchen (222), in einer Routentabelle der Eingangsnetzwerkvorrichtung, nach einem Hostrouteneintrag, der mit einem IP-Adresspräfix einer Hostroute in der BGP-Aktualisierungsnachricht und einer Maskenlänge des IP-Adresspräfix in der BGP-Aktualisierungsnachricht übereinstimmt, wobei der Hostrouteneintrag ein IP-Adresspräfix, eine Maskenlänge und einen Next-Hop umfasst, wobei das IP-Adresspräfix der Hostroute eine IP-Adresse einer virtuellen Maschine innerhalb des zweiten Netzwerks umfasst und die Maskenlänge des IP-Adresspräfix eine Länge der IP-Adresse der virtuellen Maschine umfasst;
wobei das Verfahren **dadurch gekennzeichnet ist, dass** als Reaktion darauf, dass kein Hostrouteneintrag gefunden wird, der mit der Hostroute in der BGP-Aktualisierungsnachricht übereinstimmt, ein Hostrouteneintrag gemäß der Hostroute in der BGP-Aktualisierungsnachricht erzeugt (224) wird und ein Next-Hop in dem Hostrouteneintrag als ein allgemeiner Routeneinkapslungs- (GRE-) Tunnel konfiguriert wird, der die Eingangsnetzwerkvorrichtung mit der zweiten Gateway-Vorrichtung verbindet; und
als Reaktion auf das Finden eines Hostrouteneintrags, der mit einem IP-Adresspräfix der Hostroute in der BGP-Aktualisierungsnachricht und einer Maskenlänge des IP-Adresspräfix in einer Routentabelle übereinstimmt, und das Bestimmen, dass sich der Next-Hop in dem Hostrouteneintrag von dem GRE-Tunnel, der die erste Gateway-Vorrichtung verbindet, unterscheidet, ein Next-Hop in dem Hostrouteneintrag zu einem GRE-Tunnel, der die zweite Gateway-Vorrichtung mit der Eingangsnetzwerkvorrichtung verbindet, geändert wird, eine zu überprüfende Kennung konfiguriert wird und eine Prüfnachricht an einen vorherigen Next-Hop des Hostrouteneintrags, der mit der zu prüfenden Kennung konfiguriert ist, gesendet wird, wobei die Prüfnachricht eine Aktualisierungsnachricht für das Border Gateway Protokoll (BGP) ist, die die Hostroute, die zuvor an die Eingangsnetzwerkvorrichtung gesendet wurde, enthält, die das IP-Adresspräfix der Hostroute in dem Hostrouteneintrag, der mit der zu überprüfenden Kennung konfiguriert ist, die Maskenlänge des IP-Adresspräfix der virtuellen Maschine und ein Hostroutenprüfpfadattribut umfasst.

8. Verfahren nach Anspruch 7, das ferner Folgendes umfasst:
Empfangen einer ersten Rückzugnachricht von dem vorherigen Next-Hop, wobei die erste Rückzugsnachricht ein IP-Adresspräfix einer nicht erreichbaren Hostroute und eine Maskenlänge des IP-Adresspräfix umfasst;
Suchen und Finden des Hostrouteneintrags, der mit der zu überprüfenden Kennung gemäß dem IP-Adresspräfix der nicht erreichbaren Hostroute und der Maskenlänge des IP-Adresspräfix konfiguriert ist; und
Löschen der zu prüfenden Kennung.

9. Verfahren nach Anspruch 7, das ferner Folgendes umfasst:
Empfangen einer zweiten Rückzugsnachricht von der ersten Gateway-Vorrichtung; und
Löschen eines Hostrouteneintrags, der mit einem IP-Adresspräfix einer Hostroute, die in der zweiten Rückzugsnachricht getragen wird, und einer Maskenlänge des IP-Adresspräfix übereinstimmt.

10. Eingangsnetzwerkvorrichtung (700) eines Dienstanbieters zum Erzeugen einer Hostroute in einem System, das eine erste Gateway-Vorrichtung (321) eines ersten Netzwerks (110), eine zweite Gateway-Vorrichtung (322) eines zweiten Netzwerks (120) umfasst, wobei die Eingangsnetzwerkvorrichtung als ein Internal Border Gateway Protokoll-(IBGP-) Peer der ersten und der zweiten Gateway-Vorrichtung konfiguriert ist, und die erste und die zweite Gateway-Vorrichtung als IBGP-Peers der Eingangsnetzwerkvorrichtung konfiguriert sind, wobei die Eingangsnetzwerkvorrichtung Folgendes umfasst:
eine Weiterleitungseinheit (710), die dazu konfiguriert ist, eine Aktualisierungsnachricht für das Border Gateway Protokoll (BGP) von der zweiten Gateway-Vorrichtung des ersten Netzwerks zu empfangen, wobei die Aktualisierungsnachricht eine Hostroute trägt; und
eine Hostrouteneinheit (731), die dazu konfiguriert ist, dann, wenn ein Hostrouteneintrag, der mit einem Internetprotokoll- (IP-) Adresspräfix einer Hostroute in der BGP-Aktualisierungsnachricht und einer Maskenlänge des IP-Adresspräfix übereinstimmt, nicht in einer Routentabelle in der Weiterleitungseinheit gefunden wird, wobei das IP-Adresspräfix der Hostroute eine IP-Adresse einer virtuellen Maschine innerhalb des einen der mehreren Netzwerke und die Maskenlänge des IP-Adresspräfix umfasst, das eine Länge der IP-Adresse der virtuellen Maschine umfasst, den Hostrouteneintrag zu erzeugen und den Hostrouteneintrag in der Routentabelle in der Weiterleitungseinheit zu speichern, wobei der Hostrouteneintrag ein IP-Adresspräfix, eine Maskenlänge und einen Next-Hop umfasst;
wobei die Hostroute in dem erzeugten Hostrouteneintrag die Hostroute in der BGP-Aktualisierungsnachricht ist und der Next-Hop in dem erzeugten Hostrouteneintrag ein GRE-Tunnel ist, der die Eingangsnetzwerkvorrichtung mit der zweiten Gateway-Vorrichtung verbindet;
wobei die Hostrouteneinheit (731) ferner dazu konfiguriert ist, dann, wenn der Hostrouteneintrag, der mit einem IP-Adresspräfix der Hostroute in der BGP-Aktualisierungsnachricht und einer Maskenlänge des IP-Adresspräfix übereinstimmt, in der Routentabelle in der Weiterleitungseinheit gefunden wird und sich ein Next-Hop in dem Hostrouteneintrag von dem GRE-Tunnel, der die Eingangsnetzwerkvorrichtung mit der ersten Gateway-Vorrichtung verbindet, unterscheidet, den Next-Hop in dem Hostrouteneintrag in einen GRE-Tunnel zu ändern, der die zweite Gateway-Vorrichtung verbindet, eine zu prüfende Kennung zu konfigurieren und eine Prüfnachricht zu erzeugen;
die Eingangsnetzwerkvorrichtung **dadurch gekennzeichnet ist, dass** die Prüfnachricht eine Aktualisierungsnachricht für das Border Gateway Protokoll (BGP) ist, die die zuvor an die Eingangsnetzwerkvorrichtung gesendete Hostroute enthält, die das IP-Adresspräfix des Hostrouteneintrags, der mit der zu prüfenden Kennung konfiguriert ist, die Maskenlänge des IP-Adresspräfix der virtuellen Maschine und ein Hostroutenprüfpfadattribut umfasst; und
die Weiterleitungseinheit (710) ferner dazu konfiguriert ist, die Prüfnachricht an einen vorherigen Next-Hop des Hostrouteneintrags zu senden, der mit der zu prüfenden Kennung konfiguriert ist.

11. Eingangsnetzwerkvorrichtung (700) nach Anspruch 10, wobei die Weiterleitungseinheit (710) ferner dazu konfiguriert ist, um ein IP-Paket zu empfangen und das IP-Paket gemäß einem Next-Hop in einem Hostrouteneintrag, der mit einer Ziel-IP-Adresse des IP-Pakets übereinstimmt, in ein GRE-Tunnelpaket einzukapseln und das GRE-Tunnelpaket an die zweite Gateway-Vorrichtung zu senden.

## Revendications

1. Procédé de génération d'un itinéraire hôte dans un système comprenant un premier dispositif de passerelle (321) d'un premier réseau (110), un second dispositif de passerelle (322) d'un second réseau (120) et un dispositif de réseau d'entrée (341) d'un fournisseur de services, le dispositif de réseau d'entrée étant configuré en tant qu'homologue de protocole de passerelle frontière interne, IBGP, des premier et second dispositifs de passerelle, et les premier et second dispositifs de passerelle étant configurés en tant qu'homologues IBGP du dispositif de réseau d'entrée, le procédé comprenant :
la génération (210), par le second dispositif de passerelle (322), d'une entrée d'itinéraire hôte comprenant un préfixe d'adresse de protocole Internet, IP, une longueur de masque et un saut suivant, le préfixe d'adresse IP et la longueur du masque étant respectivement une adresse IP d'une machine virtuelle dans le second réseau et une longueur de l'adresse IP de la machine virtuelle ;
l'envoi (212), à partir du second dispositif de passerelle (322), d'un message de mise à jour de protocole de passerelle frontière, BGP, au dispositif de réseau d'entrée du fournisseur de services, le message de mise à jour BGP comprenant un itinéraire hôte de l'entrée d'itinéraire hôte ;
le procédé étant **caractérisé par**
la réception (220), au niveau du premier dispositif de passerelle (321), d'un message de vérification du dispositif de réseau d'entrée (341), le message de vérification étant un message de mise à jour de protocole de passerelle frontière, BGP, comportant l'itinéraire hôte envoyé précédemment au dispositif de réseau d'entrée comprenant le préfixe d'adresse IP, la longueur de masque du préfixe d'adresse IP de la machine virtuelle et un attribut de chemin de vérification d'itinéraire hôte ; et
la vérification, par le premier dispositif de passerelle (321), de l'accessibilité de l'itinéraire hôte dans le message de vérification une fois que le message de vérification est reçu du dispositif de réseau d'entrée (341), lors de la détermination, par le premier dispositif de passerelle, que le message de vérification porte l'attribut de chemin de vérification d'itinéraire hôte.

2. Procédé selon la revendication 1, comprenant en outre :
l'envoi, à partir du premier dispositif de passerelle, d'un premier message de retrait à l'homologue IBGP ; le premier message de retrait comprend un préfixe d'adresse IP d'un itinéraire hôte inaccessible et une longueur du préfixe d'adresse IP.

3. Procédé selon la revendication 1, comprenant en outre :
la suppression, par le premier dispositif de passerelle, de l'entrée d'itinéraire hôte ;
l'envoi, à partir du premier dispositif de passerelle, d'un second message de retrait à l'homologue IBGP ; le second message de retrait comprend un préfixe d'adresse IP d'un itinéraire hôte dans une entrée d'itinéraire hôte supprimée et une longueur du préfixe d'adresse IP.

4. Dispositif de passerelle (600) pour générer un itinéraire hôte dans un système comprenant un premier dispositif de passerelle (321) d'un premier réseau (110), un second dispositif de passerelle (322) d'un second réseau (120) et un dispositif de réseau d'entrée (341) d'un fournisseur de services, le dispositif de réseau d'entrée étant configuré en tant qu'homologue de protocole de passerelle frontière interne, IBGP, des premier et second dispositifs de passerelle, et les premier et second dispositifs de passerelle étant configurés en tant qu'homologues IBGP du dispositif de réseau d'entrée, le dispositif de passerelle comprenant :
une unité de commande d'itinéraire (631), configurée pour générer une entrée d'itinéraire hôte comprenant un préfixe d'adresse de protocole Internet, IP, une longueur de masque et un saut suivant, le préfixe d'adresse IP et la longueur du masque étant respectivement une adresse IP d'une machine virtuelle dans le second réseau et une longueur de l'adresse IP de la machine virtuelle ; et générer un message de mise à jour de protocole de passerelle frontière, BGP, transportant l'itinéraire hôte de l'entrée d'itinéraire hôte ; et
une unité de transfert (610), configurée pour stocker l'entrée d'itinéraire hôte et envoyer le message de mise à jour BGP au dispositif de réseau d'entrée du fournisseur de services ;
le dispositif de passerelle étant **caractérisé en ce que** :
l'unité de transfert (610) est en outre configurée pour recevoir un message de vérification du dispositif de réseau d'entrée, le message de vérification étant un message de mise à jour de protocole de passerelle frontière, BGP, comportant l'itinéraire hôte envoyé précédemment au dispositif de réseau d'entrée comprenant le préfixe d'adresse IP, la longueur de masque du préfixe d'adresse IP de la machine virtuelle et un attribut de chemin de vérification d'itinéraire hôte ; et
l'unité de commande d'itinéraire (631) est en outre configurée pour vérifier l'accessibilité de l'itinéraire hôte dans le message de vérification une fois que le message de vérification est reçu du dispositif de réseau d'entrée, lors de la détermination, par le premier dispositif de passerelle, que le message de vérification transporte l'attribut de chemin de vérification d'itinéraire hôte.

5. Dispositif de passerelle (600) selon la revendication 4,
l'unité de commande d'itinéraire (631) étant en outre configurée pour générer un premier message de retrait comprenant un préfixe d'adresse IP d'un itinéraire hôte inaccessible et une longueur du préfixe d'adresse IP ; et
l'unité de transfert (610) devant envoyer le premier message de retrait à l'homologue IBGP.

6. Dispositif de passerelle (600) selon la revendication 4,
l'unité de transfert (610) étant en outre configurée pour recevoir un paquet de tunnel d'encapsulation générique d'itinéraire, GRE, de l'homologue IBGP ; désencapsuler le paquet de tunnel GRE en un paquet IP ; localiser une entrée d'itinéraire hôte en fonction d'une adresse IP de destination du paquet IP, et transférer le paquet IP en fonction d'un saut suivant dans l'entrée d'itinéraire hôte localisée.

7. Procédé pour générer un itinéraire hôte dans un système comprenant un premier dispositif de passerelle (321) d'un premier réseau (110), un second dispositif de passerelle (322) d'un second réseau (120) et un dispositif de réseau d'entrée (341) d'un fournisseur de services, le dispositif de réseau d'entrée étant configuré en tant qu'homologue de protocole de passerelle frontière interne, IBGP, des premier et second dispositifs de passerelle, et les premier et second dispositifs de passerelle étant configurés en tant qu'homologues IBGP du dispositif de réseau d'entrée, le procédé étant exécuté par le dispositif de réseau d'entrée du fournisseur de services et comprenant :
la réception (220), au niveau du dispositif de réseau d'entrée, d'un message de mise à jour de protocole de passerelle frontière, BGP, du second dispositif de passerelle du second réseau ;
la recherche (222) dans une table d'itinéraires du dispositif de réseau d'entrée d'une entrée d'itinéraire hôte correspondant à un préfixe d'adresse IP d'un itinéraire hôte dans le message de mise à jour BGP et une longueur de masque du préfixe d'adresse IP dans le message de mise à jour BGP, l'entrée d'itinéraire hôte comprenant un préfixe d'adresse IP, une longueur de masque et un saut suivant, le préfixe d'adresse IP de l'itinéraire hôte comprenant une adresse IP d'une machine virtuelle dans le second réseau et la longueur de masque du préfixe d'adresse IP comprenant une longueur de l'adresse IP de la machine virtuelle ;
le procédé étant **caractérisé par**
en réponse à la non-localisation d'une entrée d'itinéraire hôte correspondant à l'itinéraire hôte dans le message de mise à jour BGP, la génération (224) d'une entrée d'itinéraire hôte selon l'itinéraire hôte dans le message de mise à jour BGP, et la configuration d'un saut suivant dans l'entrée d'itinéraire hôte pour être un tunnel d'encapsulation générique d'itinéraire, GRE, reliant le dispositif de réseau d'entrée au second dispositif de passerelle ; et
en réponse à la recherche d'une entrée d'itinéraire hôte correspondant à un préfixe d'adresse IP de l'itinéraire hôte dans le message de mise à jour BGP et à une longueur de masque du préfixe d'adresse IP dans une table d'itinéraires, et à la détermination que le saut suivant dans l'entrée d'itinéraire hôte diffère à partir du tunnel GRE reliant le premier dispositif de passerelle, la modification d'un saut suivant dans l'entrée d'itinéraire hôte vers un tunnel GRE reliant le second dispositif de passerelle au dispositif de réseau d'entrée, la configuration d'un identifiant à vérifier et l'envoi d'un message de vérification à un saut suivant précédent de l'entrée d'itinéraire hôte configuré avec l'identifiant à vérifier, le message de vérification étant un message de mise à jour de protocole de passerelle frontière, BGP, comportant l'itinéraire hôte envoyé précédemment au dispositif de réseau d'entrée comprenant le préfixe d'adresse IP de l'itinéraire hôte dans l'entrée d'itinéraire hôte configurée avec l'identificateur à vérifier, la longueur de masque du préfixe d'adresse IP de la machine virtuelle et un attribut de chemin de vérification d'itinéraire hôte.

8. Procédé selon la revendication 7, comprenant en outre :
la réception d'un premier message de retrait du saut suivant précédent, le premier message de retrait comprenant un préfixe d'adresse IP d'un itinéraire hôte inaccessible et une longueur de masque du préfixe d'adresse IP ;
la recherche et la localisation de l'entrée d'itinéraire hôte configurée avec l'identifiant à vérifier en fonction du préfixe d'adresse IP de l'itinéraire hôte inaccessible et de la longueur de masque du préfixe d'adresse IP ; et
la suppression de l'identifiant à vérifier.

9. Procédé selon la revendication 7, comprenant en outre :
la réception d'un second message de retrait du premier dispositif de passerelle ; et
la suppression d'une entrée d'itinéraire hôte correspondant à un préfixe d'adresse IP d'un itinéraire hôte transporté dans le second message de retrait et à une longueur de masque du préfixe d'adresse IP.

10. Dispositif de réseau d'entrée (700) d'un fournisseur de services pour générer un itinéraire hôte dans un système comprenant un premier dispositif de passerelle (321) d'un premier réseau (110), un second dispositif de passerelle (322) d'un second réseau (120), le dispositif de réseau d'entrée étant configuré en tant qu'homologue de protocole de passerelle frontière interne, IBGP, des premier et second dispositifs de passerelle, et les premier et second dispositifs de passerelle étant configurés en tant qu'homologues IBGP du dispositif de réseau d'entrée, le dispositif de réseau d'entrée comprenant :
une unité de transfert (710) configurée pour recevoir un message de mise à jour de protocole de passerelle frontière, BGP, du second dispositif de passerelle du premier réseau, le message de mise à jour transportant un itinéraire hôte ; et
une unité d'itinéraire hôte (731) configurée pour, lorsqu'une entrée d'itinéraire hôte correspondant à un préfixe d'adresse de protocole Internet, IP, d'un itinéraire hôte dans le message de mise à jour BGP et une longueur de masque du préfixe d'adresse IP n'est pas localisée dans une table d'itinéraires dans l'unité de transfert, le préfixe d'adresse IP de l'itinéraire hôte comprenant une adresse IP d'une machine virtuelle à l'intérieur dudit un de la pluralité de réseaux et la longueur de masque du préfixe d'adresse IP comprenant une longueur de l'adresse IP de la machine virtuelle, générer l'entrée d'itinéraire hôte et stocker l'entrée d'itinéraire hôte dans la table d'itinéraires dans l'unité de transfert, l'entrée d'itinéraire hôte comprenant un préfixe d'adresse IP, une longueur de masque et un saut suivant ;
l'itinéraire hôte dans l'entrée d'itinéraire hôte générée étant l'itinéraire hôte dans le message de mise à jour BGP, et le saut suivant dans l'entrée d'itinéraire hôte générée étant un tunnel GRE reliant le dispositif de réseau d'entrée au second dispositif de passerelle ;
l'unité d'itinéraire hôte (731) étant en outre configurée pour, lorsque l'entrée d'itinéraire hôte correspondant à un préfixe d'adresse IP de l'itinéraire hôte dans le message de mise à jour BGP et qu'une longueur de masque du préfixe d'adresse IP est localisée dans la table d'itinéraires dans l'unité de transfert et un saut suivant dans l'entrée d'itinéraire hôte diffèrent du tunnel GRE reliant le dispositif de réseau d'entrée au premier dispositif de passerelle, modifier le saut suivant dans l'entrée d'itinéraire hôte vers un tunnel GRE reliant le second dispositif de passerelle, configurer un identifiant à vérifier et générer un message de vérification ; le dispositif de réseau d'entrée étant **caractérisé en ce que** le message de vérification est un message de mise à jour de protocole de passerelle frontière, BGP, comportant l'itinéraire hôte envoyé précédemment au dispositif de réseau d'entrée comprenant le préfixe d'adresse IP de l'entrée d'itinéraire hôte configurée avec l'identifiant à vérifier, la longueur de masque du préfixe d'adresse IP de la machine virtuelle et un attribut de chemin de vérification d'itinéraire hôte ; et
l'unité de transfert (710) est en outre configurée pour envoyer le message de vérification à un saut suivant précédent de l'entrée d'itinéraire hôte configurée avec l'identificateur à vérifier.

11. Dispositif de réseau d'entrée (700) selon la revendication 10,
l'unité de transfert (710) étant en outre configurée pour recevoir un paquet IP et encapsuler le paquet IP dans un paquet de tunnel GRE en fonction d'un saut suivant dans une entrée d'itinéraire hôte correspondant à une adresse IP de destination du paquet IP, et envoyer le paquet de tunnel GRE au second dispositif de passerelle.
